Europäisches Patentamt

(19) European Patent Office

Office européen des brevets

(11) Numéro de publication: **0 160 150 B1**

(12) **FASCICULE DE BREVET EUROPEEN**

(45) Date de publication du fascicule du brevet:
**20.04.88**

(21) Numéro de dépôt: **84401415.9**

(22) Date de dépôt: **04.07.84**

(51) Int. Cl.⁴: **C 04 B 40/02**, H 05 B 6/78

(54) **Procédé de traitement thermique de matériaux isolants.**

(30) Priorité: **08.07.83 FR 8311401**

(43) Date de publication de la demande:
**06.11.85 Bulletin 85/45**

(45) Mention de la délivrance du brevet:
**20.04.88 Bulletin 88/16**

(84) Etats contractants désignés:
**AT BE CH DE FR GB IT LI LU NL SE**

(56) Documents cités:
**DE - A - 1 560 817**
**DE - A - 2 612 927**
**FR - A - 939 351**
**FR - A - 2 103 239**
**FR - A - 2 501 450**

(73) Titulaire: **ISOVER SAINT-GOBAIN, Les Miroirs 18, avenue d'Alsace, F-92400 Courbevoie (FR)**

(72) Inventeur: **Bichot, Bernard, Rue Henri Ayrald Ronquerolles, F-60600 Clermont (FR)**
Inventeur: **Louis, Bernard, 5 rue Fontaine Saint-Maur Louveaucourt Bailleval, F-60140 Liancourt (FR)**

(74) Mandataire: **de Toytot, Robert et al, SAINT-GOBAIN RECHERCHE 39 quai Lucien Lefranc, F-93300 Aubervilliers (FR)**

ACTORUM AG

## Description

La présente invention concerne le traitement thermique de produits comprenant un matériau isolant thermique, notamment en vue de provoquer en son sein des réactions de polymérisation et/ou de polycondensation de certains de ses composants.

Elle a pour objet un procédé de chauffage par pertes diélectriques sous rayonnement hyperfréquentiel, s'appliquant notamment, de manière particulièrement avantageuse, au traitement de feutres, ou de produits à base de feutre de fibres minérales, notamment des pièces de forme telles que des coquilles d'isolation.

On sait que, jusqu'à présent, de telles coquilles sont couramment fabriquées par enroulement autour d'un mandrin, en un certain nombre de couches superposées, d'un matelas de fibres minérales imprégné d'un liant thermo-durcissable, un traitement thermique permettant de fixer définitivement la forme donnée à l'objet.

Le traitement thermique appliqué jusqu'ici était effectué généralement à l'aide d'air chaud soufflé par l'intérieur de la coquille, le plus souvent, pour les coquilles de forts diamètres, ou, pour les coquilles de petits diamètres, par l'extérieur avec chauffage par conduction de l'extérieur vers l'intérieur. Un tel mode de traitement est décrit, par exemple, dans le brevet FR-A-2 325 007.

Cette technique usuelle présente l'inconvénient d'être relativement coûteuse en énergie et peu rapide, car elle suppose l'élimination préalable de l'eau résiduelle subsistant dans le matériau et qui a pour origine les diverses opérations préliminaires de sa fabrication, notamment la formation et l'imprégnation du matelas fibreux.

La présente invention met à profit ce qui constitue un handicap pour le procédé usuel, à savoir la présence d'eau en quantité non négligeable dans tout le volume des objets à traiter, en faisant appel au chauffage par pertes diélectriques sous rayonnement hyperfréquentiel.

On sait que la technique du chauffage par rayonnement électro-magnétique constitue actuellement le seul moyen s'appliquant à un matériau non conducteur de l'électricité, et isolant thermique, qui permette de lui apporter de la chaleur de manière répartie, simultanément dans tout son volume, pour autant que ledit matériau présente un facteur de perte diélectrique notable, ce qui est notamment le cas lorsqu'il contient des substances comprenant des molécules dites polaires: la vibration des dipôles sous l'action d'un champ électrique alternatif de fréquence élevée provoque l'échauffement de la substance, et donc du matériau lui-même.

L'eau liquide constituant précisément l'une des substances polaires les plus courantes, il est bien connu d'appliquer le chauffage par pertes diélectriques aux matériaux qui en contiennent.

Ainsi, de nombreux procédés et dispositifs utilisent le chauffage par pertes diélectriques en vue de séchage pour des matériaux tels que le bois (brevets FR-A-2 000 992, 2 147 456), les fibres tex-tiles sous forme de câbles pliés, de bobines ou d'écheveaux (brevets FR-A-2 103 239, 2 299 443, 2 423 948), certaines pâtes céramiques (brevets FR-A-2 076 405, 2 100 539), etc. Ces procédés combinent généralement au chauffage par pertes diélectriques un soufflage d'air chaud, le premier présentant l'inconvénient de ne porter la peau même des objets qu'à une température nettement inférieure à celle du coeur, et la puissance dissipée par ce moyen allant décroissant avec la teneur en eau.

Un procédé de ce type a d'ailleurs été déjà proposé, dans le document DE-A-1 560 817, pour traiter des produits à base de fibres minérales imprégnées, d'un liant susceptible de durcir sous l'effet de réactions de polymérisation et/ou de polycondensation.

S'appuyant sur les résultats obtenus en faisant appel à un rayonnement haute fréquence (HF), ce document réserve le procédé aux produits de masse volumique élevée (supérieure à 150 kg/m$^3$), contenant des liants dont les températures de traitement se situent à environ 100 °C, niveau auquel se trouve d'ailleurs réglée la température du balayage gazeux permettant de traiter la peau des objets. Cette délimitation par le critère de la masse volumique du domaine d'application du procédé se fonde notamment sur la rapide réduction du temps nécessaire au traitement accompagnant l'augmentation de la masse volumique.

Pour préciser encore l'état de l'art antérieur, on peut noter aussi que beaucoup des appareils décrits s'attachent à éviter certains inconvénients qui résultent de la réflexion des rayonnements électromagnétiques sur les surfaces métalliques de l'enceinte dans laquelle est réalisé le traitement, notamment les phénomènes d'interférences entre les ondes incidentes et les ondes réfléchies, qui se traduisent par une hétérogénéité de température au sein des matériaux traités, et donc du traitement lui-même. Ils font appel à cet effet à des dispositifs dits brasseurs d'ondes.

On rappellera en outre que les rayonnements de fréquences les plus élevées ne possèdent qu'une pénétration insuffisante dans la plupart des matériaux, et les plus faibles entraînent, pour une même puissance énergétique dissipée, une augmentation du champ électrique, et par conséquent des risques d'amorçage d'arc électrique, ou «claquage». Une gamme moyenne est généralement préférée, qui ne nécessite que des tensions de l'ordre de quelques kVolts.

La présente invention, qui vise le traitement des produits fibreux de masse volumique comprise entre 30 et 150 kg/m$^3$, fait appel aux rayonnements hyperfréquentiels, ou micro-ondes, couvrant des fréquences allant de 300 MHz à 30 GHz, correspondant respectivement à des longueurs d'ondes de l'ordre du mètre et du centimètre. Elle utilise de préférence, comme le plus généralement pour les applications industrielles, la bande de fréquences centrée sur 2450 MHz correspondant à environ 12 cm de longueur d'ondes.

Lors de leur fabrication selon le procédé usuel, les coquilles d'isolation au traitement desquelles, par exemple, la présente invention propose d'appliquer le chauffage par micro-ondes, reçoivent généralement une imprégnation à coeur par une solution aqueuse de résines thermo-durcissables, par exemple formo-phénoliques de type résol, et après mise en forme de la coquille, la stabilisation des dimensions est obtenue habituellement par un traitement thermique provoquant élimination de l'eau contenue, puis réactions de polymérisation et polycondensation. Pour les durées de traitement de l'ordre de la minute compatibles avec les réalisations industrielles, le déclenchement de ces réactions nécessite normalement des températures de l'ordre de 150–200 °C, c'est-à-dire sensiblement supérieures à la température d'ébullition de l'eau.

La mise en oeuvre d'un chauffage par micro-ondes ne paraissait pas a priori permettre d'atteindre les températures ci-dessus mentionnées, et donc d'obtenir des cinétiques de réactions satisfaisantes: en effet, dans la mesure où les résines à soumettre auxdites réactions, de même que les fibres minérales, ne possèdent que de faibles facteurs de pertes et sont donc peu susceptibles de s'échauffer, par elles-mêmes, sous l'effet des micro-ondes, et où l'eau constitue le seul élément présent dans lesdites coquilles à posséder un facteur de perte élevé, la limite supérieure des températures susceptibles d'être atteintes semble fixée à 100 °C.

Or, en pratique, contrairement à ce qui était attendu, il n'est pas apparu nécessaire d'introduire de substances polaires supplémentaires dans les coquilles à soumettre au traitement par micro-ondes, dès lors que lesdites coquilles possèdent une teneur en eau suffisante par unité de volume du produit, et que la puissance mise en jeu, elle-même aussi par unité de volume, atteint un niveau minimal.

C'est notamment sur ce résultat surprenant que s'appuie la présente invention, qui a pour objet un procédé de traitement thermique d'un matériau à base de fibres minérales et contenant un liant capable de durcir sous l'effet de la température par des réactions de polymérisation et/ou de polycondensation selon lequel ledit matériau reçoit l'apport dudit liant sous forme de solution aqueuse et, après ajustement de sa teneur en eau, est soumis simultanément à un champ de rayonnement électromagnétique et à un balayage de sa surface par un courant gazeux chaud, ce procédé comportant, pour un matériau de masse volumique comprise entre 30 et 150 kg/m$^3$ et un liant de température minimale de déclenchement de réactions de durcissement de l'ordre de 150 à 200 °C, le réglage de la teneur en eau à une valeur comprise entre 0,7 et 5 kg/m$^3$ et celui de la fréquence dudit rayonnement dans la gamme des hyperfréquences, (300 MHz à 30 GHz) l'intensité dudit rayonnement étant portée à un niveau assez élevé pour obtenir un échauffement au sein dudit matériau au moins à ladite température minimale, et ledit courant gazeux chaud étant porté au moins à ladite température durant la durée d'application du rayonnement.

De préférence, la teneur en eau du matériau à base de fibres minérales de densité comprise entre 30 et 150 kg/m$^3$ sera réglée à une valeur comprise entre 1 à 3 kg/m$^3$, le liant étant lui-même présent dans le matériau à raison de 1 à 20% en masse.

Dans une forme de mise en oeuvre du procédé s'appliquant à des objets discrets constitués dudit matériau, on soumet lesdits objets à un déplacement dans le champ du rayonnement. De manière simple, afin de réaliser un traitement d'objets en série, on fera défiler lesdits objets, selon une translation, de préférence dans un plan orthogonal à la direction de propagation du rayonnement micro-ondes, et avantageusement en outre avec une rotation sur eux-mêmes, de préférence autour d'un axe formant avec la direction de propagation du rayonnement un angle non nul, avantageusement de 90°, au regard de l'homogénéité.

Pour de tels matériaux, l'énergie micro-ondes appliquée au produit sera généralement d'au moins 0,1 kWh/kg de produit, la puissance dirigée sur le produit étant de préférence d'au moins 2 kW/kg de produit pour une teneur en eau de 2% en masse.

En complément, le procédé prévoit d'apporter sous forme de gaz chaud et sec entre 1/4 et 1/2 de la puissance micro-ondes injectée.

Dans ces conditions, à titre informatif, on peut noter que, l'énergie totale consommée compte-tenu d'un rendement de production d'énergie micro-ondes d'environ 1/2, est de l'ordre de 0,2 kWh/kg, pour un produit à 2% d'eau, soit environ 5 fois moins que par chauffage par air chaud seul.

On décrit ci-après un dispositif pour la mise en oeuvre du procédé de traitement thermique selon l'invention comprenant une enceinte métallique étanche aux micro-ondes, munie d'un organe de transfert du produit, d'au moins une source de rayonnement hyperfréquentiel dirigée vers ledit produit en une source de gaz chaud raccordée à des moyens pour diriger ledit gaz vers la surface du produit, la puissance apportée par ledit gaz représentant 1/4 à 1/2 de la puissance micro-ondes. Dans le cas où le produit à traiter est constitué d'objets discrets, l'organe de transfert desdits objets comporte de préférence des moyens de mise en rotation desdits objets sur eux-mêmes autour d'un axe formant avec la direction des micro-ondes un angle différent de zéro, avantageusement de 90°.

Selon une forme d'exécution intéressant le traitement d'objets présentant une forme cylindrique de révolution, l'organe de transfert des objets et les moyens de mise en rotation comprennent en combinaison une table support, éventuellement mobile, perméable aux micro-ondes, et des organes pousseurs, tels que doigts ou barres, agissant pour faire rouler les objets cylindriques sur le support.

Selon une variante assurant la même fonction, les moyens de transfert et de rotation sont constitués par la combinaison d'un tapis mobile et d'un plafond ou de patins fixes, entre lesquels et au contact desquels sont disposés les objets, le déplacement du tapis entraînant celui des objets, à vitesse moitié de celle du tapis, et leur mise en rotation.

Le dispositif comporte avantageusement une pluralité de générateurs, chacun de préférence commandé pour un détecteur de présence d'objets dans la zone qu'il couvre, de manière à éviter son fonctionnement à vide.

La puissance micro-ondes installée, pour des fréquences de la bande de 2450 MHz sera telle, de préférence, que le produit reçoive au moins 2 kW micro-ondes par kg de produit pour une teneur en eau de 2% en masse environ.

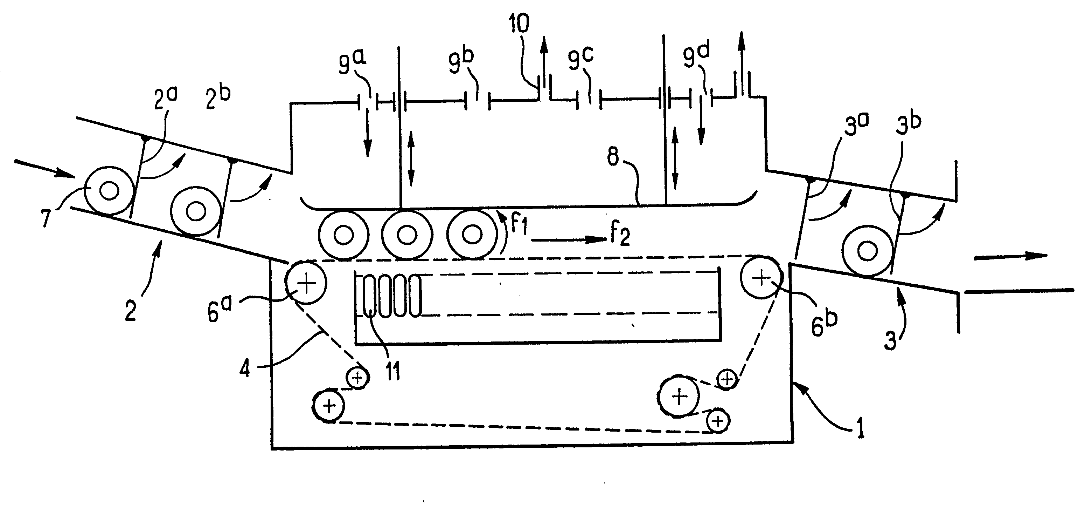

Un exemple de réalisation d'un dispositif pour la mise en oeuvre du procédé de traitement thermique selon l'invention sera maintenant décrit, afin d'illustrer ses caractéristiques et avantages, en référence au dessin joint (figure unique) qui représente une vue schématique, selon une coupe longitudinale, d'un dispositif à bande transporteuse et patins presseurs.

Ce dispositif comporte une enceinte métallique 1, comprenant un sas d'entrée 2 et un sas de sortie 3, munis chacun de volets mobiles pivotants, respectivement 2a, 2b, 3a, 3b, assurant l'étanchéité aux micro-ondes.

Une bande transporteuse en tissu de fibres de verre traité aux silicones 4 définit à l'aide de tambours 6a et 6b la trajectoire d'entraînement des coquilles 7 au travers de l'enceinte 1.

Deux patins presseurs 8 exercent une légère pression sur les coquilles 7, les amenant à tourner sur elles-mêmes, selon la flèche $f_1$, lors de l'avance de la bande 4 dans le sens de la flèche $f_2$.

De l'air chaud additionnel est injecté dans l'enceinte par les orifices 9a, 9b,... qui peuvent avantageusement se prolonger par des conduites, non représentées, jusqu'au niveau des coquilles circulant sur la bande 4.

Des orifices 10, raccordés à un dispositif antipollution non représenté, sont prévus pour le traitement des effluents gazeux. Ce dispositif peut être d'une puissance et d'un coût beaucoup plus faibles que dans le cas du procédé traditionnel à gaz chaud.

Au-dessous de la bande 4 sont disposés des générateurs de micro-ondes 11, émettant dans la gamme centrée sur 2450 MHz, dont les orifices d'émission dirigés sur la bande 4 sont de forme rectangulaire. Chacun des générateurs est commandé par un détecteur de présence des coquilles, non représenté. On prévoit par exemple pour une étuve traitant 300 kg/heure de coquilles contenant 2% en masse d'eau, 6 groupes de 6 générateurs d'une puissance micro-ondes unitaire de 1 kW, constituant un damier de 36 faisceaux de micro-ondes dirigés vers la bande 4.

**Revendications**

1. Procédé de traitement thermique d'un matériau à base de fibres minérales et contenant un liant capable de durcir sous l'effet de la température par des réactions de polymérisation et/ou de polycondensation, selon lequel ledit matériau reçoit l'apport dudit liant sous forme de solution aqueuse et, après ajustement de sa teneur en eau, est soumis simultanément à un champ de rayonnement électromagnétique et à un balayage de sa surface par un courant gazeux chaud, caractérisé en ce qu'il comporte, pour un matériau de masse volumique comprise entre 30 et 150 kg/m$^3$ et un liant de température minimale de déclenchement des réactions de durcissement de l'ordre de 150 à 200 °C, le réglage de la teneur en eau à une valeur comprise entre 0,7 et 5 kg/m$^3$, la fréquence dudit rayonnement étant choisie dans la gamme des hyperfréquences (300 MHz à 30 GHz), l'intensité de son champ étant portée à un niveau assez élevé pour obtenir un échauffement au sein dudit matériau au moins à ladite température minimale, et ledit courant gazeux chaud de balayage étant porté au moins à ladite température durant la durée de l'application dudit rayonnement.

2. Procédé selon la revendication 1, caractérisé en ce que la teneur en eau est réglée à une valeur comprise entre 1 et 3 kg/m$^3$.

3. Procédé selon l'une des revendications précédentes, caractérisé en ce que la teneur en liant du matériau à base de fibres minérales est de 1 à 20% en masse dudit matériau.

4. Procédé selon l'une des revendications précédentes, caractérisé en ce qu'en vue de son application à des objets discrets constitués dudit matériau, on soumet lesdits objets à un déplacement dans le champ du rayonnement.

5. Procédé selon la revendication 4, caractérisé en ce que ledit déplacement est une translation dans un plan orthogonal à la direction de propagation du rayonnement, de préférence combinée à une rotation des objets sur eux-mêmes, par rapport à un axe de rotation formant, de préférence encore, un angle de 90° avec la dite direction.

6. Procédé selon l'une des revendications 2 à 5, caractérisé en ce que l'énergie micro-ondes appliquée au matériau à traiter est au moins de 0,1 kWh/kg de matériau.

7. Procédé selon l'une des revendications 1 à 6, caractérisé en ce que le courant gazeux chauffé projeté sur le matériau à traiter représente un apport énergétique complémentaire compris entre 1/2 et 1/4 de l'énergie micro-ondes injectée.

8. Procédé selon l'une des revendications 1 à 7, caractérisé en ce que la puissance micro-ondes appliquée au produit à traiter est d'au moins 2 kW par kg de produit pour une teneur en eau de l'ordre de 2% en masse.

9. Procédé selon l'une des revendications précédentes, caractérisé en ce que la puissance apportée par ledit courant gazeux chaud est comprise entre 1/4 et 1/2 de la puissance du rayonnement hyperfréquentiel.

**Patentansprüche**

1. Verfahren zur Wärmebehandlung eines Materials auf der Basis von Mineralfasern, welches ein Bindemittel enthält, das in der Lage ist, unter Temperatureinwirkung durch Reaktionen der Polymerisation und/oder der Polykondensation auszuhärten, bei dem das Material den Auftrag des Bindemittels in Form einer wässrigen Lösung erhält und nach Einstellen seines Wassergehalts gleichzeitig einem elektromagnetischen Feld und einer Spülung seiner Oberfläche durch einen warmen Gasstrom unterworfen wird, dadurch gekennzeichnet, dass es, für ein Material mit einer Rohdichte zwischen 30 und 150 kg/m³ und ein Bindemittel mit einer Mindesttemperatur des Beginns der Aushärtungsreaktionen in der Grössenordnung von 150–200 °C, die Einstellung des Wassergehalts auf einen Wert zwischen 0,7 und 5 kg/m³ umfasst, wobei die Frequenz der Strahlung im Bereich der Ultrahochfrequenzen (300 MHz bis 30 GHz) gewählt wird, wobei die Intensität seines Feldes auf ein ausreichend hohes Niveau gebracht wird, um eine Erhitzung im Inneren des Materials zumindest auf die Reaktionsauslösetemperatur zu erhalten, und wobei der heisse Spülungsgasstrom wenigstens auf diese Temperatur während der Anwendungsdauer der Strahlung gebracht wird.

2. Verfahren nach Anspruch 1, dadurch gekennzeichnet, dass der Wassergehalt auf einen Wert zwischen 1 und 3 kg/m³ eingestellt wird.

3. Verfahren nach einem der vorhergehenden Ansprüche, dadurch gekennzeichnet, dass der Bindemittelgehalt des Materials auf Mineralfaserbasis zwischen 1 und 20 Massen-% des Materials liegt.

4. Verfahren nach einem der vorhergehenden Ansprüche, dadurch gekennzeichnet, dass in Anbetracht seiner Anwendung auf diskrete aus dem Material bestehende Objekte, die Objekte einer Bewegung in dem Strahlenfeld unterworfen werden.

5. Verfahren nach Anspruch 4, dadurch gekennzeichnet, dass die Bewegung eine Translation in einer zur Ausbreitungsrichtung der Strahlen orthogonalen Ebene ist, welche vorzugsweise mit einer Drehung der Objekte um sich selber bezüglich einer Drehachse verbunden ist, die weiter bevorzugt einen Winkel von 90° mit der Bewegungsrichtung bildet.

6. Verfahren nach einem der Ansprüche 2 bis 5, dadurch gekennzeichnet, dass die Mikrowellenenergie, die auf das zu behandelnde Material aufgebracht wird, wenigstens 0,1 kWh/kg-Material beträgt.

7. Verfahren nach einem der Ansprüche 1 bis 6, dadurch gekennzeichnet, dass der auf das zu behandelnde Material aufgebrachte erhitzte Gasstrom ein ergänzendes Energieangebot zwischen 1/2 und 1/4 der eingebrachten Mikrowellenenergie darstellt.

8. Verfahren nach einem der Ansprüche 1 bis 7, dadurch gekennzeichnet, dass die Mikrowellenkraft, die auf das zu behandelnde Produkt aufgebracht wird, wenigstens 2 kW/kg-Produkt für einen Wassergehalt in der Grössenordnung von 2 Massen-% beträgt.

9. Verfahren nach einem der vorhergehenden Ansprüche, dadurch gekennzeichnet, dass die durch den heissen Gasstrom aufgebrachte Energie zwischen 1/4 und 1/2 der Energie der Ultrahochfrequenzstrahlung beträgt.

## Claims

1. Method of heat treating a mineral fibre based material containing a binder adapted to harden under the effect of temperature by polymerisation and/or polycondensation reactions, whereby the said material receives the addition of the said binder in the form of an aqueous solution and, after adjustment of its water content, is subjected simultaneously to a field of electromagnetic radiation and to a flow of hot gas sweeping over its surface, characterized in that for a material having a volumetric bulk comprised between 30 and 150 kg/cu.m and a binder for which the minimum temperature required to trigger hardening reactions is around 150 to 200 °C, it involves adjusting the water content to a value comprised between 0.7 and 5 kg/cu.m, the frequency of the said radiation being chosen from the hyperfrequency range (300 MHz to 30 GHz), the intensity of its field being raised to a fairly high level to obtain heating within the heart of the said material up to at least the said minimum temperature, the said flow of hot gas being raised to at least the said temperature for the period during which the radiation is applied.

2. Method according to claim 1, characterized in that the water content is adjusted to a value comprised between 1 and 3 kg/cu.m.

3. Method according to one of the preceding claims, characterized in that the binder content in the mineral fibre based material is 1 to 20% by mass of the said material.

4. Method according to one of the preceding claims, characterized in that with a view to its being applied to discrete objects which consist of the said material, the said objects are subjected to displacement into the field of radiation.

5. Method according to claim 4, characterized in that the said displacement is a translatory movement in a plane at rightangles to the direction of propagation of the rays, preferably combined with a rotation of the objects on themselves in respect of an axis of rotation which again preferably forms an angle of 90° to the said direction.

6. Method according to one of claims 2 to 5, characterized in that the microwave energy applied to the material to be treated is at least 0.1 kWh/kg of material.

7. Method according to one of claims 1 to 6, characterized in that the flow of heated gas projected onto the material to be treated represents an additional supply of energy comprised between 1/2 and 1/4 of the injected microwave energy.

8. Method according to one of claims 1 to 7, characterized in that the microwave power ap-

9  **0160150**  10

plied to the product to be treated is at least 2 kW per kg of product for a water content of around 2% by mass.

9. Method according to one of the preceding claims, characterized in that the power contributed by the said flow of heated gas is comprised between 1/4 and 1/2 of the power of the hyperfrequency radiation.

6